# EUROPEAN PATENT APPLICATION

(11) **EP 4 520 162 A1**
(43) Date of publication of application: **12.03.2025**
(21) Application number: 22942596.2
(22) Date of filing: 16.05.2022
(51) Int. Cl.: A01G 3/08

(54) **HAND-HELD WORK IMPLEMENT**

(71) Applicant: Yamabiko Corporation, Ohme-shi Tokyo 198-8760 (JP)
(72) Inventor: MOMIYAMA, Hiroshi, Ohme-shi, Tokyo 198-8760 (JP); MIYAHARA, Yoichi, Ohme-shi, Tokyo 198-8760 (JP)
(74) Representative: Canzler & Bergmeier Patentanwälte Partnerschaft mbB
(86) International application number: PCT/JP2022/020413
(87) International publication number: WO 2023/223391

(57) **Abstract**

The present invention makes it possible to maintain desired work accuracy even when the grip on an operation lever has been loosened when performing work by moving upward or sideward a work machine unit equipped at the distal end of the operation lever. This hand-held work machine comprises a work machine unit on the distal end side of an operation lever and is for performing work while the operation lever is held by the hand, wherein the operating lever comprises: a linear section that extends in the extending direction of a working part of the work machine unit, and a curved section that joins the work machine unit to the linear section.

## Description

### Technical field

The present invention relates to a handheld working machine.

### Background art

Conventionally, a handheld working machine (portable working machine) capable of being used in work for mowing grass, pruning twigs and leaves, pruning branches of a tree, and shaking down fruit and nuts is known (see Patent Literature 1 mentioned below).

This handheld working machine includes an operating rod with a grip or a handle and a working machine unit provided on the head end of the operating rod. A worker holds the grip or the handle with a hand to perform the various kinds of work described above using the working machine unit. In some cases, a single type of working machine unit is fixed to one working machine. In other cases, more than one type of working machine unit can be interchangeably equipped, and therefore it is possible to use one working machine to perform various kinds of work.

### Citation list

### Patent Literature

PTL1: Japanese Patent Application Laid-Open No.H11-127662

### Summary of Invention

### Technical Problem

The working machine unit provided on the head end of the operating rod of the above-described handheld working machine faces upward or sideways for some kinds of work. Examples of the work include pruning twigs and leaves, pruning branches of a tree, and shaking down fruit and nuts.

A conventional handheld working machine generally includes heavy units such as a working machine unit on the head end of the operating rod and a drive unit on the base end of the operating rod. Therefore, the center of gravity of each of the heavy units is offset from the center of the operating rod. A moment of force is applied to around the center of the operating rod due to the gravity of each of the heavy units when the grip strength on the operating rod is reduced while the working machine unit faces upward or sideways to perform the work as described above. Consequently, the operating rod is rotated, and the precision of the work by the working machine unit is deteriorated. To avoid this situation, an operator needs to tightly grasp the operating rod during the work. However, the work intensity is increased by this means, and therefore it is difficult to continue the work for a long time.

The present invention is proposed to address the above-described problems. That is, one of the object of this invention is to make it possible to maintain the desired precision of the work even though the grip strength on the operating rod is reduced when the working machine unit provided on the head end of the operating rod faces upward or sideways to perform the work. The other object is to make it possible to continue the work while the grip strength on the operating rod is weak.

### Solution to Problem

To solve the above-described problems, a handheld working machine according to an aspect of the present invention includes an operating rod held with a hand to perform work and a working machine unit provided on a head end of the operating rod. The operating rod includes a straight part extending in a direction of extension of a working device of the working machine unit and a curved part connecting the straight part to the working machine unit.

### Advantageous Effect of Invention

According to an aspect of the invention, the curved part is provided in the operating rod, and therefore it is possible to bring the central axis of the straight part held with the operator's hand close to the center of gravity of the machine body. Also, the curved part is provided in the operating rod, and therefore it is possible to bring the central axis of the straight part held with the operator's hand close to the working position of the working machine unit.

By this means, it is possible to maintain the desired precision of the work even though the grip strength on the operating rod is reduced while the working machine unit provided on the head end of the operating rod faces upward or sideways to perform the work. In addition, it is possible to continue the work even though the grip strength on the operating rod is weak, and therefore it is possible to reduce the work intensity when the work is continued. Moreover, the straight part held with the operator's hand is brought close to the position of the working device, and therefore it makes it easy to align the working device with the target position. Consequently, it is possible to perform the work with a high degree of precision.

### Brief Description of Drawings

Fig. 1 is a perspective view for illustrating a handheld working machine according to an embodiment of the invention;
Fig. 2 is a view for illustrating the handheld working machine according to an embodiment of the invention ((a) is a plan view, and (b) is a side view);
Fig. 3 is a view for illustrating the relationship between the center of gravity of a machine body and the central axis of a straight part ((a) shows a state in which the center of gravity of the machine body coincides with the central axis of the straight part, and (b) shows a state in which the central axis of the straight part is shifted from the center of gravity of the machine body) ;
Fig. 4 is a view for illustrating a handheld working machine according to another embodiment of the invention ((a) is a plan view, and (b) is a side view); and
Fig. 5 is a view for illustrating the handheld working machine according to another embodiment of the invention ((a) is a plan view, and (b) is a side view).

### Description of Embodiments

Hereinafter, embodiments of the present invention will be described with reference to the drawings. In the description below, the same reference numbers in the different drawings indicate the same functional parts, and therefore repeated description for each of the drawings is omitted. Here, the arrow X indicates the direction of the central axis O described later, and the arrow Y and Z indicate two directions orthogonal to the direction of the arrow X and orthogonal to one other in the drawings.

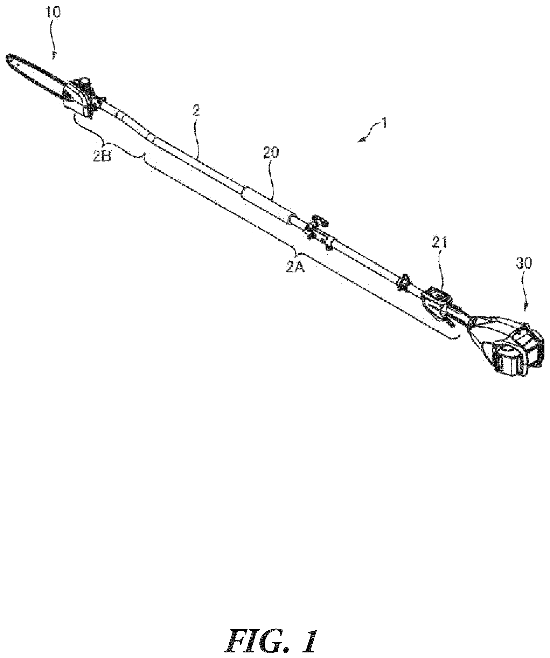

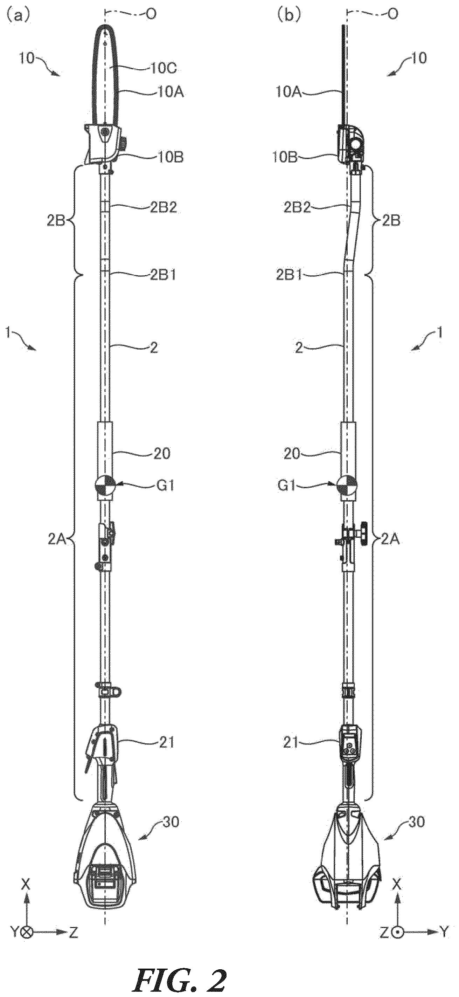

As illustrated in Fig. 1 and Fig. 2, a handheld working machine 1 according to an embodiment of the invention includes an operating rod 2 and a working machine unit 10 provided on the head end of the operating rod 2. In addition, the handheld working machine 1 includes a drive unit 30 on the side of the operating rod 2 gripped by the operator (base end) in the illustrated example.

In the example illustrated in Fig. 1 and Fig. 2, a working device of the working machine unit 10 is a chainsaw with a cutting blade 10A configured to continuously move. The cutting blade 10A of the working machine unit 10 is mounted on a chain engaged with a sprocket in a gearbox 10B, and the chain slides along the circumference of a guide plate 10C to continuously move the cutting blade 10A.

The drive unit 30 includes a motor to drive the working machine unit 10. The motor is an engine or an electric motor. When the motor is an engine, the drive unit 30 includes a fuel tank for accumulating fuel to operate the engine. When the motor is an electric motor, the drive unit 30 includes a battery to supply electricity to the electric motor. Here, the drive unit 30 may be separated from the operating rod 2 and put on the body of the operator, for example, carried on the operator's shoulder or wound around the operator's waist.

The power generated by the drive unit 30 is transmitted to the gearbox 10B of the working machine unit 10 provided on the head end of the operating rod 2 via a flexible transmission shaft (not illustrated) provided in the operating rod 2.

The operating rod 2 of the handheld working machine 1 illustrated in Fig. 1 and Fig. 2 includes a straight part 2A extending along the direction of the extension of the working device of the working machine unit 10 and a curved part 2B connecting the straight part 2B to the working machine unit 10. When the working device is a chainsaw, the direction of the extension of the working device corresponds to the direction of the movement of the cutting blade 10A.

The curved part 2B is provided to bring the central axis O of the straight part 2A close to a center of gravity G1 of the machine body of the handheld working machine 1. Also, the curved part 2B is provided to bring the central axis O of the straight part 2A close to the position of the working device of the working machine unit 10. Here, the center of gravity G1 of the machine body may be the center of gravity of the whole handheld working machine 1 or the center of gravity of the working machine unit 10 alone. In addition, the position of the working device is the position of the cutting blade 10A when the working machine unit 10 is a chainsaw.

In the example illustrated in Fig. 2, the center of gravity G1 of the machine body is the center of gravity of the whole handheld working machine 1, and it is located at the middle position of the operating rod 2. The central axis O of the straight part 2A of the operating rod 2 is laid to pass through or nearby the center of gravity G1 of the machine body.

The curved part 2B is provided on the head end of the straight part 2A to connect the gearbox 10B of the working machine unit 10 to the operating rod 2 so as to bring the central axis O of the straight part 2A close to the center of gravity G1 of the machine body. This curved part 2B allows the straight part 2A provided along the direction of the extension of the working device to move in parallel so as to be close to the center of gravity G1 of the machine body.

The curved part 2B includes a first curved part 2B1 and a second curved part 2B, and therefore it is curved in two steps in the opposite directions. By providing the curved part 2B, the working device of the working machine unit 10 is extended so as to be close to the central axis O.

A grip 20 for the operator to grasp the operating rod 2 during the work is provided on the straight part 2A of the operating rod 2. In addition, an operating device 21 is provided on the side of the straight part 2A of the operating rod 2 that the operator grips. The operating device 21 includes operating buttons to start and stop the drive unit 30 and change the speed of the drive unit 30.

When the handheld working machine 1 performs the work for pruning branches of a tree, the operator (not shown) holds the grip 20 with either hand and holds a part near the operating device 21 with the other hand while the working machine unit 10 faces upward or sideways.

In this case, the operating rod 2 is provided with the straight part 2A near the center of gravity G1 of the machine body, and the operator performs the work while holding the straight part 2A with the hand. Therefore, a large moment of force due to the gravity is less likely to be produced around the central axis O during the work. Consequently, it is possible to prevent the operating rod 2 from rotating even though the operator holds the grip 20 with a weak grip, and an extra load is not applied to the arm of the operator.

By this means, it is possible to maintain the desired precision of the work even though the operator loosens his grip on the operating rod 2 when the working machine unit 10 provided on the head end of the operating rod 2 faces upward or sideways to perform the work. In addition, it is possible to continue the work while the grip strength on the operating rod 2 is weak, and therefore it is possible to reduce the work intensity when the work is continued.

The operating rod 2 is provided with the curved part 2B to allow the central axis O of the straight part 2A to be close to the working device of the working machine unit 10. By this means, the operator can easily align the cutting blade 10A of the working machine unit 10 extending along the central axis O with the target point of the work while holding the straight part 2A with the hand. Consequently, it is possible to perform the work with a high degree of precision ensuring that the cutting blade 10A is accurately aligned with the target point even though the operator holds the operating rod 2 with a weak grip.

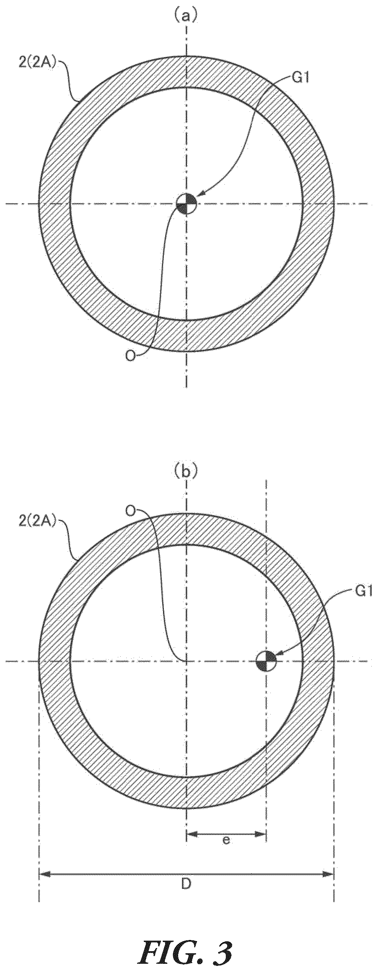

In this case, it is preferred that the position of the center of gravity G1 of the machine body coincides with the central axis O of the straight part 2A as illustrated in Fig. 3(a). However, they do not always have to completely coincide with one another. It is possible to provide the same effect as long as the central axis O passes nearby the center of gravity G1 of the machine body. As illustrated in Fig. 3(b), a distance e between the center of gravity G1 of the machine body and the central axis O can fall within the diameter D of the operating rod 2 in a cross section perpendicular to the central axis O. In this case, it is possible to provide the same effect as when the center of gravity G1 of the machine body coincides with the central axis O.

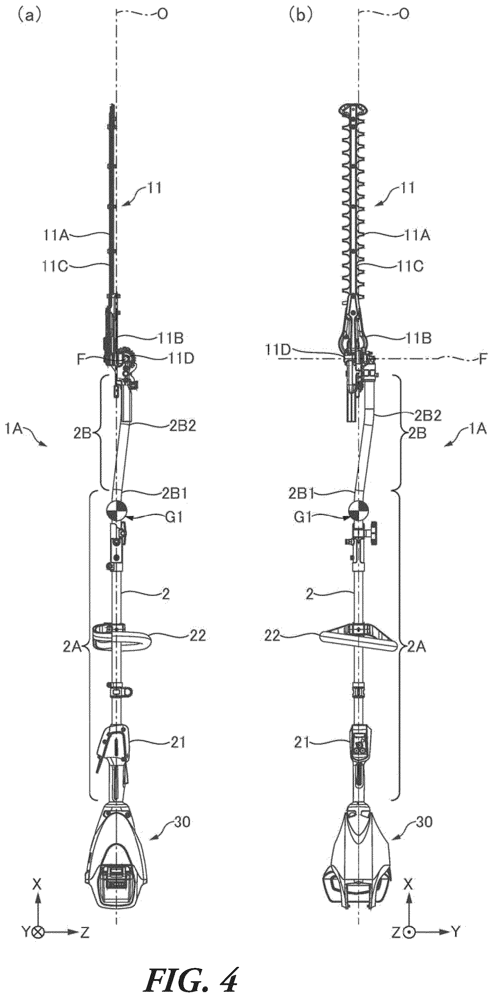

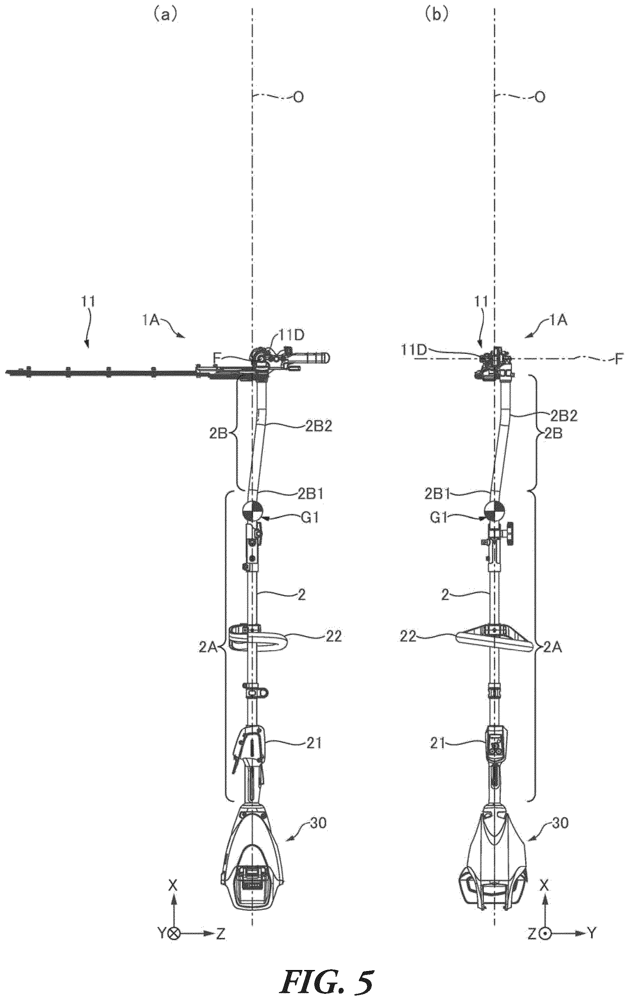

Fig. 4 and Fig. 5 show a handheld working machine 1A according to another embodiment. In the case of this handheld working machine 1A, the working device of the working machine unit 11 provided on the head end of the operating rod 2 is a hedge trimmer with a reciprocating mower blade 11A. The mower blade 11A of the working machine unit 11 is coupled with a crank mechanism in the gearbox 11B, and it reciprocates along a guide member 11C along the central axis O.

The handheld working machine 1A illustrated in Fig. 4 and Fig. 5 is different from the above-described handheld working machine 1 in that it includes the working machine unit 11, and a handle 22 is provided on the straight part 2A of the operating rod 2. The other components are the same as of the handheld working machine 1.

In the case of this handheld working machine 1A according to the embodiment, the curved part 2B is provided so as to bring the central axis O of the straight part 2A close to the center of gravity G1 of the machine body in the same way as the above-described embodiment. Also, the working machine unit 11 is provided on the head end of the straight part 2A via the curved part 2B including the first curved part 2B1 and the second curved part 2B2.

When the handheld working machine 1A performs the work for pruning twigs and leaves, the operator (not illustrated) holds the handle 22 with either hand and holds a part near the operating device 21 with the other hand while the working machine unit 11 faces upward or sideways.

In this case, the operating rod 2 is provided with the straight part 2A near the center of gravity G1 of the machine body, and the operator performs the work while holding the straight part 2A with the hand; and therefore, a moment of force due to the gravity is less likely to be applied to around the central axis O during the work. Accordingly, an extra load is not applied to the arm of the operator in the same way as the above-described embodiment even though the operator holds the handle 22 with a weak grip.

By this means, it is possible to maintain the desired precision of the work even though the operator loosens his grip on the operating rod 2 when the working machine unit 11 provided on the head end of the operating rod 2 faces upward or sideways to perform the work; it is possible to continue the work while the grip strength on the operating rod 2 is weak. Consequently, it is possible to reduce the work intensity when the handheld working machine 1A continues the work.

As illustrated in Fig. 4 and Fig. 5, the working machine unit 11 is attached to the operating rod 2 via a bending part 11D. By this means, it is possible to rotate the working device of the working machine unit 11 around a rotating axis F of the bending part 11D, and therefore it is possible to bend the direction of the extension of the working device from the central axis O of the straight part 2A (see Fig. 5).

For the handheld working machine 1A including this working machine unit 11, it is unfavorable to significantly shift the position of the center of gravity G1 of the machine body from the central axis O even when the working machine unit 11 is bent around the rotating axis F. To address this, an appropriate counterweight is provided around the rotating axis F of the working machine unit 11, and therefore it is possible to adjust the position of the center of gravity G1 of the machine body.

Embodiments of the invention are not limited to the handheld working machines 1 and 1A according to the above-described embodiments. The working device of the working machine unit provided on the head end of the operating rod 2 is not limited to a chainsaw and a hedge trimmer. The working machine unit may be provided with working devices to perform various kinds of work, for example, a shaker to shake fruit down and a blower to blow twigs and leaves down.

In the above-described examples, the drive unit 30 provided on the base end of the operating rod 2 includes the motor, and the flexible transmission shaft is provided in the operating shaft 2 to drive the working machine unit 10 and 11 on the head end of the operating rod 2. The motor may be provided on the head end of the operating rod 2 to drive the working machine unit 10 and 11. When the motor is provided on the head end of the operating rod 2, the battery to supply electric power to the motor may be provided at various positions, for example, provided on the head end of the operating rod 2 and the side of the operating rod 2 gripped by the operator (base end), and put on the body of the operator. In this case, the position of the center of gravity G1 of the machine body described above is set by a heavy component united with the operating rod 2.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1, 1A: handheld working machine, 2: operating rod,
2A: straight part, 2B: curved part,
2B1: first curved part, 2B2: second curved part,
10, 11: working machine unit,
10A: cutting blade, 10B: gearbox, 10C: guide plate,
11A: mower blade, 11B: gearbox,
11C: guide member, 11D: bending part,
20: grip, 21: operating device, 22: handle,
30: drive unit, O: central axis,
G1: center of gravity of the machine body

## Claims

1. A handheld working machine comprising:
an operating rod held with a hand to perform work; and
a working machine unit provided on a head end of the operating rod,
wherein the operating rod includes a straight part extending in a direction of extension of a working device of the working machine unit and a curved part connecting the straight part to the working machine unit.

2. The handheld working machine according to claim 1, wherein the curved part is provided so as to bring a central axis of the straight part close to a center of gravity of a machine body.

3. The handheld working machine according to claim 1, wherein the curved part is provided so as to bring a central axis of the straight part close to a position of the working device of the working machine unit.

4. The handheld working machine according to claim 1, wherein the curved part includes a first curved part and a second curved part which are curved in opposite directions.

5. The handheld working machine according to claim 1, wherein a drive unit is mounted on a base end of the operating rod and configured to drive the working machine unit via a flexible transmission shaft provided in the operating rod.

6. The handheld working machine according to claim 1, wherein a motor is provided on the head end of the operating rod and configured to drive the working machine unit.

7. The handheld working machine according to claim 1, wherein the working device includes a cutting blade configured to continuously move.

8. The handheld working machine according to claim 1, wherein the working device includes a mower blade configured to reciprocate.

9. The handheld working machine according to claim 1, wherein a grip is provided on the straight part of the operating rod.
